# EUROPEAN PATENT APPLICATION

(11) **EP 3 246 891 A1**
(43) Date of publication of application: **22.11.2017**
(21) Application number: 16207017.1
(22) Date of filing: 27.12.2016
(51) Int. Cl.: G08G 1/123, G07B 15/02

(54) **DEVICE AND METHOD FOR NOTIFICATION OF ESTIMATED ARRIVAL TIME ON ELECTRONIC TICKET**

(30) Priority: 17.05.2016 KR 20160060223
(71) Applicant: SK Planet Co., Ltd., Seongnam-si, Gyeonggi-do 13487 (KR)
(72) Inventor: KIM, Jeehyuk, 21457 Incheon (KR)
(74) Representative: Isarpatent

(57) **Abstract**

A device and method for a notification of an estimated arrival time on an electronic ticket are provided. The device creates the electronic ticket that contains transportation information, starting point information, destination information, a departure time, and the estimated arrival time. The device calculates the estimated arrival time, based on the transportation information, the starting point information, the destination information, and the departure time. The device displays in real time the calculated estimated arrival time on the electronic ticket.

## Description

### CROSS-REFERENCE TO RELATED APPLICATION

This application claims priority to and the benefit of Korean Patent Application No. 10-2016-0060223 filed in the Korean Intellectual Property Office on May 17, 2016 the entire contents of which are incorporated herein by reference

### TECHNICAL FIELD

The present invention relates to an electronic ticket for transportation and, more particularly, to a device and method for providing and displaying an electronic ticket containing transportation information, starting point information, destination information, a departure time, and an estimated arrival time.

### BACKGROUND

Details disclosed in this section merely offer background information regarding embodiments of the present invention. No determination has been made, and no assertion is made, as to whether any of the below might be applicable as prior art with regard to the present invention.

With the remarkable growth of information communication technology, a great variety of electronic devices such as a smart phone, a tablet PC, and a mobile device are constantly evolving to perform various functions.

These electronic devices, which are dramatically popularized in these days, not only provide a traditional voice communication function, but also offer various functions such as a data communication function, a digital camera function, a multimedia playback function, a game function, an internet access function, and the like.

Additionally, many services are now provided using such electronic device. A location tracking service, a navigation service, and an electronic ticket service are examples of well known and widely used services.

The location tracking service is based on technique for determining an exact location of a service-requesting device. Typically used is GPS (Global Positioning System) for receiving signals from GPS satellites and calculating a user's current position.

The navigation service uses location tracking technique for determining the current position of a target such as a moving vehicle or a user on the road. Also, the navigation service can offer the shortest and optimal route to the destination and also provide an estimated arrival time.

The electronic ticket service issues and offers, on an online basis, a ticket for transportation such as a train, a bus and a ship in the form of digital data rather than paper.

However, like a conventional paper ticket, an electronic ticket merely contain general information, such as a starting point, a destination, a departure time and a scheduled arrival time, in connection with transportation. Namely, a typical electronic ticket service fails to provide a passenger with a real-time estimated arrival time that reflects the current traffic situation.

Of course, it is possible to predict the arrival time by inputting information recorded on the electronic ticket to the existing navigation service. Nevertheless, a difference may occur between the route selected by the navigation service and the actual route of transportation, so that the arrival time predicted by the navigation service may be inaccurate. Therefore, a passenger often suffers inconvenience of having to separately operate an navigation application.

### SUMMARY

In order to address the aforesaid or any other issue, the present invention provides a device and method for providing an electronic ticket on which an estimated arrival time, varying in real time in consideration of a traffic situation, is displayed.

In addition, the present invention may further provide the electronic ticket with a delay time, after the departure of transportation, by comparing the initially estimated arrival time with the estimated arrival time varying in real time.

In this disclosure, the term electronic ticket refers to a ticket which is offered to an electronic device in the form of digital data and contains information about an estimated arrival time which varies in real time according to traffic situations.

According to an embodiment of the present invention, a service device may include a service communication unit configured to transmit or receive data through a communication network; and a service control unit configured to provide an electronic ticket containing transportation information, starting point information, destination information, a departure time, and an estimated arrival time to a terminal device through the service communication unit, and configured to calculate the estimated arrival time based on the transportation information, the starting point information, the destination information, and the departure time.

In the service device, the service control unit may include an electronic ticket module configured to issue the electronic ticket and to provide the electronic ticket to the terminal device; and a navigation module configured to calculate the estimated arrival time which varies according to traffic situations.

In the service device, the navigation module may be further configured to compare a current time with the departure time, if the current time is before the departure time, to extract route information based on the starting point information and the destination information, and to initially calculate the estimated arrival time based on the route information, and if the current time is after the departure time, to collect real-time location information of transportation and traffic information, and to newly calculate the estimated arrival time in consideration of the real-time location information and the traffic information.

In the service device, the navigation module may be further configured to collect the real-time location information from one of a user terminal device and a real-time transportation tracking system.

In the service device, the navigation module may be further configured to, if the current time is after the departure time, calculate a delay time by comparing the initially calculated estimated arrival time with the newly calculated estimated arrival time.

According to an embodiment of the present invention, a terminal device may include a communication unit configured to transmit or receive data through a communication network; an input unit configured to receive a customer's input for requesting an electronic ticket and to deliver the received input to a service device; a display unit configured to display the electronic ticket that contains transportation information, starting point information, destination information, a departure time, and an estimated arrival time; a memory unit configured to store the electronic ticket; a location tracking unit configured to collecting user's real-time location information; and a control unit configured to control the communication unit to receive the electronic ticket from the service device and to control the display unit to display in real time the estimated arrival time on the electronic ticket.

In the terminal device, the control unit may be further configured to compare a current time with the departure time, if the current time is before the departure time, to extract route information based on the starting point information and the destination information, and to initially calculate the estimated arrival time based on the route information, and if the current time is after the departure time, to newly calculate the estimated arrival time in consideration of the real-time location information, collected by the location tracking unit, and traffic information.

In the terminal device, the control unit may be further configured to, if the current time is after the departure time, calculate a delay time by comparing the initially calculated estimated arrival time with the newly calculated estimated arrival time.

In the terminal device, the control unit may be further configured to compare the real-time location information, collected by the location tracking unit, with location information of transportation so as to check whether a user is boarding on the transportation.

In the terminal device, the control unit may be further configured to send the estimated arrival time to persons selected by a user.

According to an embodiment of the present invention, a method for a notification of an estimated arrival time on an electronic ticket at a device may include steps of creating the electronic ticket that contains transportation information, starting point information, destination information, a departure time, and the estimated arrival time; calculating the estimated arrival time, based on the transportation information, the starting point information, the destination information, and the departure time; and displaying in real time the calculated estimated arrival time on the electronic ticket.

In the method, the calculating step may include comparing a current time with the departure time, if the current time is before the departure time, extracting route information based on the starting point information and the destination information, and initially calculating the estimated arrival time based on the route information, and if the current time is after the departure time, collecting real-time location information of transportation and traffic information, and newly calculating the estimated arrival time in consideration of the real-time location information and the traffic information.

An embodiment of the present invention may also provide a computer-readable recording medium that has, recorded thereon, a program executing the above method.

### BRIEF DESCRIPTION OF THE DRAWINGS

FIG. 1 is a schematic diagram illustrating a system for a notification of an estimated arrival time on an electronic ticket according to embodiments of the present invention.
FIG. 2 is a block diagram illustrating a terminal device for a notification of an estimated arrival time on an electronic ticket according to embodiments of the present invention.
FIG. 3 is a block diagram illustrating a service device for a notification of an estimated arrival time on an electronic ticket according to embodiments of the present invention.
FIG. 4 is a flow diagram illustrating a method for a notification of an estimated arrival time on an electronic ticket according to embodiments of the present invention.
FIG. 5 is a flow diagram illustrating a method for a notification of an estimated arrival time calculated at a service device according to an embodiment of the present invention.
FIG. 6 is a flow diagram illustrating a method for a notification of an estimated arrival time calculated at a terminal device according to another embodiment of the present invention.
FIG. 7 is an exemplary screenshot illustrating an electronic ticket displayed on a terminal device before a departure time according to an embodiment of the present invention.
FIG. 8 is an exemplary screenshot illustrating an electronic ticket displayed on a terminal device after a departure time according to another embodiment of the present invention.
FIG. 9 is a block diagram illustrating an operating environment of an electronic device for implementing a notification of an estimated arrival time on an electronic ticket according to an embodiment of the present invention.

### DETAILED DESCRIPTION

Now, embodiments of the present invention will be described with reference to the accompanying drawings.

In the following description and the accompanying drawings, however, well known techniques may not be described or illustrated in detail to avoid obscuring the subject matter of the present invention. Through the drawings, the same or similar reference numerals denote corresponding features consistently.

The terms and words used in the following description, drawings and claims are not limited to the bibliographical meanings and are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

The expression "1", "2", "first", or "second" used in various embodiments of this disclosure may modify various elements of such embodiments but does not limit the corresponding elements. The above expressions do not limit the sequence and/or importance of the elements but may be used for distinguishing one element from other elements. For example, a first device and a second device indicate different devices although both of them are the same kind of devices.

When it is stated that a certain element is "coupled to" or "connected to" another element, the element may be directly coupled or connected to another element, or a new element may exist between both elements. In contrast, when it is stated that a certain element is "directly coupled to" or "directly connected to" another element, a new element does not exist between both elements.

The terms used in describing various embodiments of this disclosure are only examples for describing a specific embodiment but do not limit such embodiments. Singular forms are intended to include plural forms unless the context clearly indicates otherwise. Unless defined differently, all terms used herein, which include technical terminologies or scientific terminologies, have the same meaning as that understood by a person skilled in the art to which the present disclosure belongs. The terms "include", "comprise", and "have" as well as derivatives thereof, mean inclusion without limitation.

In addition, the term "module" or "unit" used herein may refer to an element for performing at least one function, operation, or task and may be implemented by software and/or hardware. A plurality of modules or units may be configured to reside on an addressable storage medium and configured to execute on one or more processors.

Now, a system, device and method for a notification of an estimated arrival time on an electronic ticket according to embodiments of the present invention will be described with reference to the accompanying drawings.

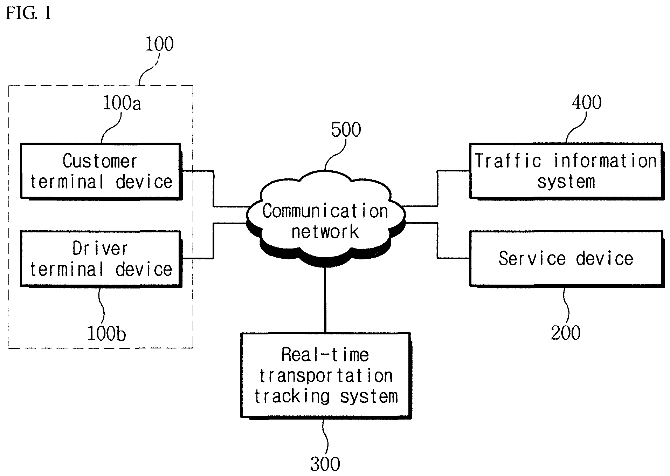

FIG. 1 is a schematic diagram illustrating a system for a notification of an estimated arrival time on an electronic ticket according to embodiments of the present invention.

Referring to FIG. 1, the system is configured to provide a notification of an estimated arrival time on an electronic ticket. The system may include a terminal device 100, a service device 200, a real-time transportation tracking system 300, and a traffic information system 400, all of which are connected to a communication network 500.

In the system, the terminal device 100 may include a customer electronic device 100a and/or a driver electronic device 100b. The customer device 100a displays an electronic ticket which contains an estimated arrival time. The driver device 100b may be equipped or placed in transportation (i.e., means of transport) in which a customer will ride or is riding. The driver device 100b is a target for real-time transportation tracking. The service device 200 is a service provider's device or server for offering an electronic ticket service. The real-time transportation tracking system 300 is an electronic entity or mechanism for providing information about a current location of transportation. The traffic information system 400 is an electronic entity or mechanism for providing information about a current traffic situation associated with transportation.

Each of the terminal device 100 and the service device 200 has one or more processors equipped therein. This processor may process program commands for executing a method of this invention and thereby perform particular functions of this invention to be described below. This processor may be a single-threaded processor in one embodiment and a multi-threaded processor in another embodiment. Further, this processor may process commands stored in a memory or storage.

Specifically, the terminal device 100 performs operations of transmitting and receiving data associated with an electronic ticket, especially, an estimated arrival time, by interworking with the service device 200, the real-time transportation tracking system 300, and the traffic information system 400 via the communication network 500.

The customer terminal device 100a receives a customer's input for requesting an electronic ticket and then delivers the input to the service device 200. Also, the customer terminal device 100a receives and stores the electronic ticket created by the service device 200 and displays the electronic ticket.

The electronic ticket contains therein and displays thereon transportation information, starting point information, destination information, a departure time, and an estimated arrival time. Also, the electronic ticket may further contain and display a delay time which is a difference between an initial estimated arrival time calculated before departure and a new estimated arrival time calculated after departure.

The transportation information refers to information about the type of specific transportation used by a customer and about the unique identification of the specific transportation. This identification information is necessary for the real-time transportation tracking system 300 which identifies the transportation and collects a real-time location of the transportation.

For example, if the transportation used by the customer is a bus, there may be a boardable bus based on a starting point, a destination, and a departure time. If the customer purchases a ticket for a desired bus, a corresponding electronic ticket having information about the identification and type of the bus is issued. Then the real-time transportation tracking system 300 receives the bus identification information from the electronic ticket and collects information about a real-time location of the bus.

The customer terminal device 100a may receive the estimated arrival time and the delay time from the service device 200 and then display them on the electronic ticket. Alternatively, the customer terminal device 100a may directly calculate the estimated arrival time and the delay time.

Additionally, the customer terminal device 100a may collect the location thereof by using a location tracking technique such as a GPS or cell ID technique. Thus, comparing the location of the terminal device 100a with the location of the transportation contained in the electronic ticket, it is possible to check whether the customer is on board.

Additionally, the customer terminal device 100a may send the estimated arrival time to selected persons. For example, the customer terminal device 100a such as a smart phone may notify the estimated arrival time to persons selected from a buddy list or phonebook through an SNS or text message service.

The service device 200 performs operations of transmitting and receiving data associated with the electronic ticket, especially, the estimated arrival time, by interworking with the terminal device 100, the real-time transportation tracking system 300, and the traffic information system 400 via the communication network 500. The service device 200 may be a server that operates a combination of a ticketing service and a navigation service.

The real-time transportation tracking system 300 performs operations of transmitting and receiving data for providing information about a real-time location of transportation by interworking with the terminal device 100, the service device 200, and the traffic information system 400 through the communication network 500. The real-time transportation tracking system 300 collects information about a current location of transportation by using the GPS and the unique identification information of the transportation.

For example, if the type of transportation is a bus, the real-time transportation tracking system 300 receives the unique identification information of the bus from the electronic ticket and collects current location information of the bus on the road through the GPS. If the type of transportation is a ship, the real-time transportation tracking system 300 receives the unique identification information of the ship from the electronic ticket and collects current location information of the ship on the sea.

The traffic information system 400 performs operations of transmitting and receiving data for providing information about a current traffic situation around transportation by interworking with the terminal device 100, the service device 200, and the real-time transportation tracking system 300 through the communication network 500.

For example, if the type of transportation is a bus, the traffic information system 400 receives real-time location information of the bus and collects road traffic information at the current location of the bus through unmanned cameras installed on the load. If the type of transportation is a ship, the traffic information system 400 receives real-time location information of the ship and collects information about other ships around the current location of the ship and weather information. Collected information may be offered to the customer terminal device 100a or the service device 200.

In one embodiment, the real-time location information of transportation may be obtained from the location of the customer terminal device 100a or the location of the driver terminal device 100b. When a customer is on board, the location of the customer terminal device 100a may indirectly indicate the location of transportation.

In another embodiment, the real-time location information of transportation may be collected by the real-time transportation tracking system 300. Based on the unique identification of each of transportations, the real-time transportation tracking system 300 may identify respective transportations and individually determine their respective locations.

In one embodiment, the estimated arrival time and the delay time may be calculated by the service device 200 and provided to the customer terminal device 100a.

In this case, the service device 200 may compare the current time with the departure time. If the current time is before the departure time, the service device 200 extracts a route from the starting point to the destination and then calculates the estimated arrival time based on the extracted route. If the current time is after the departure time, the service device 200 obtains the real-time location information from the terminal device 100 or the real-time transportation tracking system 300, obtains the traffic information from the traffic information system 400, and then calculates the estimated arrival time based on the obtained information. The service device 200 provides the estimated arrival time to the customer terminal device 100a to display it on the electronic ticket. Also, the service device 200 may further calculate the delay time between the initial estimated arrival time and the new estimated arrival time and then offer it to the customer terminal device 100a.

In another embodiment, the estimated arrival time and the delay time may be calculated directly by the customer terminal device 100a.

In this case, the customer terminal device 100a may compare the current time with the departure time. If the current time is before the departure time, the customer terminal device 100a extracts a route from the starting point to the destination and then calculates the estimated arrival time based on the extracted route. If the current time is after the departure time, the customer terminal device 100a obtains the real-time location information by using the GPS thereof, obtains the traffic information from the traffic information system 400, and then calculates the estimated arrival time based on the obtained information. The customer terminal device 100a displays the estimated arrival time on the electronic ticket. Also, the customer terminal device 100a may further calculate the delay time between the initial estimated arrival time and the new estimated arrival time and then display it on the electronic ticket.

The communication network 500 performs a function to deliver or exchange data or information among the terminal device 100, the service device 200, the real-time transportation tracking system 300, and the traffic information system 400.

Particularly, the communication network 500 may use various forms of communication networks, for example, wireless communication networks, such as WLAN (Wireless LAN), Wi-Fi, Wibro, Wimax, and HSDPA (High Speed Downlink Packet Access), or wired communication networks, such as Ethernet, xDSL (ADSL, VDSL), HFC (Hybrid Fiber Coaxial cable), FTTC (Fiber to the Curb), and FTTH (Fiber to the Home). Meanwhile, the communication network 500 is not limited to the above examples and may use any other communication network well known or to be developed.

The terminal device 100 is capable of transmitting and receiving various kinds of data through the communication network 500 in response to user's manipulations. The terminal device 100 may be one of a smart phone, a tablet PC, a laptop, a personal computer (PC), a personal digital assistant (PDA), a smart TV, a mobile communication terminal, and the like.

The terminal device 100 may perform voice or data communication using the communication network 500 and include a memory for storing a browser for communication with the service device 200 via the communication network 500, a microprocessor for performing calculation and control by executing various kinds of programs, and the like.

As discussed above and will be described below, this invention allows a user to be simply aware of an estimated arrival time on an electronic ticket through interaction among the terminal device 100, the service device 200, the real-time transportation tracking system 300, and the traffic information system 400.

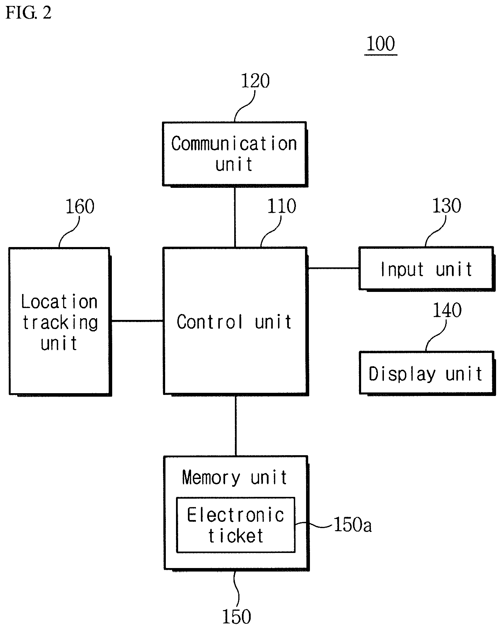

Hereinafter, embodiments of this invention will be described in more detail with reference to FIGS. 2 to 8.

FIG. 2 is a block diagram illustrating a terminal device for a notification of an estimated arrival time on an electronic ticket according to embodiments of the present invention.

Referring to FIG. 2, the terminal device 100 includes, but not limited to, a control unit 110, a communication unit 120, an input unit 130, a display unit 140, a memory unit 150, and a location tracking unit 160. In particular, the memory unit 150 may have an electronic ticket 150a.

The control unit 110 may be a processor for controlling an operating system (OS) and respective elements. The control unit 110 may totally control the terminal device 100 and, especially, control operations of calculating and displaying the estimated arrival time on the electronic ticket 150a.

The control unit 110 may control operations of receiving, from the service device 200, the electronic ticket 150a that contains the transportation information, the starting point information, the destination information, the departure time and the estimated arrival time, and displaying in real time the estimated arrival time on the electronic ticket. The transportation information may include information about the type of specific transportation used by a customer and about the unique identification of the specific transportation.

Additionally, the control unit 110 may compare the current time with the departure time. If the current time is before the departure time, the control unit 110 may extract a route from the starting point to the destination and then calculate the estimated arrival time based on the extracted route. If the current time is after the departure time, the control unit 110 may calculate the estimated arrival time in consideration of the traffic information and the location information. As discussed above, the estimated arrival time may be received from the service device 200 rather than calculated directly by the terminal device 100.

Additionally, when the current time is after the departure time, the control unit 110 may further calculate the delay time between the initial estimated arrival time and the new estimated arrival time. In this disclosure, the delay time may have a positive or negative value. Namely, the delay time may indicate a delayed arrival or a shortened arrival.

Additionally, when the current time is after the departure time, the control unit 110 may check whether the customer is on board, by comparing the location information about the customer terminal device 100a, collected from the location tracking unit 160, with the location information of the transportation, collected from the real-time transportation tracking system 300.

Additionally, the control unit 110 may transmit the estimated arrival time to selected persons by means of, for example, an SNS service, a text message service, or any other messaging manner.

The communication unit 120 performs a function of transmitting or receiving data for providing a notification of an estimated arrival time on the electronic ticket 150a by communicating with the service device 200, the real-time transportation tracking system 300, and the traffic information system 400 via the communication network 500.

The communication unit 120 may include at least one of a wireless communication module (not shown) and a wired communication module (not shown). The wireless communication module is configured for transmission and reception of data, based on suitable wireless communication technique. In case of using wireless communication, the terminal device 100 may transmit or receive data to or from the service device 200, the real-time transportation tracking system 300, and the traffic information system 400 by using one of a radio network communication module, a WLAN communication module, and a WPAN communication module. Also, the wired communication module is configured for transmission and reception of data, based on proper wired communication technique. The wired communication module may access the communication network 500 through a wire and then transmit or receive data to or from the service device 200, the real-time transportation tracking system 300, and the traffic information system 400 via the communication network 500.

The input unit 130 is configured to receive user's manipulation for entering various kinds of information and setting or controlling various functions of the terminal device 100, to create a corresponding input signal, and to deliver the input signal to the control unit 110 or the service device 200.

The input unit 130 may include a keypad and/or a touch pad. Also, the input unit 130 formed of a touch panel may be integrated with the display unit 140 formed of a display panel to constitute a touch screen. The input unit 130 may use various input mechanisms such as a keyboard, a mouse, a joystick, a jog wheel, a touch-sensitive unit, a gesture or image detection unit, a voice recognition unit, and the like.

Particularly, the input unit 130 may receive a customer's input for requesting an electronic ticket and then deliver it to the service device 200. Specifically, this input may include information about a starting point, a destination, a departure time, and a transportation type.

The display unit 140 is configured to display information about operating states and results of the terminal device 100. Also, the display unit 140 may display a menu of the terminal device 100 and user data entered by the user.

The display unit 140 may be formed of LCD (Liquid Crystal Display), TFT-LCD (Thin Film Transistor LCD), LED (Light Emitting Diode), OLED (Organic LED), AMOLED (Active Matrix OLED), retina display, flexible display, 3-dimensional display, or the like. In case the display unit 140 is formed of a touch screen, the display unit 140 may perform all or parts of functions of the input unit 130.

Specifically, under the control of the control unit 110, the display unit 140 may display the electronic ticket 150a received from the service device 200 and stored in the memory unit 150. The electronic ticket 150a may contain therein and display thereon transportation information including transportation type and identification, starting point information, destination information, a departure time, and an estimated arrival time.

If the current time is before the departure time, the estimated arrival time is calculated on the basis of a route extracted from the starting point to the destination. At this time, a prearranged bus route, etc. may be further considered.

If the current time is after the departure time, the estimated arrival time is calculated again in consideration of both real-time location information and traffic information. Further, the delay time may be calculated between the initial estimated arrival time and the new estimated arrival time. The estimated arrival time and the delay time may be varied and displayed in real time on the display unit 140.

The memory unit 150 includes a main memory unit and an auxiliary memory unit. The memory unit 150 is configured to store programs required for the operation of the terminal device 100 and also store related data, thus including a program region and a data region. Particularly, the memory unit 150 stores an operating system for booting the terminal device 100, a program for providing a notification of an estimated arrival time on the electronic ticket, and the like.

In particular, the memory unit 130 stores the electronic ticket 150a that contains various kinds of information received from the service device. Such information contained in the electronic ticket 150a may include transportation information such as transportation type and identification, starting point information, destination information, a departure time, and an estimated arrival time. If the current time is after the departure time, information about a delay time may be further included.

The location tracking unit 160 obtains information about the current location of the terminal device 100 and delivers the obtained information to the control unit 110.

The location tracking unit 160 of the customer terminal device 100a or the driver terminal device 100b may collect information about time-dependent locations. Without the real-time transportation tracking system 300, the location tracking unit 160 may track indirectly the location of transportation on which a customer or a driver is boarding.

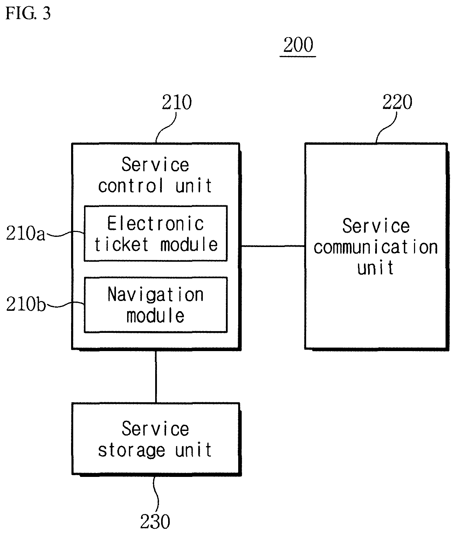

FIG. 3 is a block diagram illustrating a service device for a notification of an estimated arrival time on an electronic ticket according to embodiments of the present invention.

Referring to FIG. 3, the service device 200 includes a service control unit 210, a service communication unit 220, and a service storage unit 230. In particular, the service control unit 210 may include an electronic ticket module 210a and a navigation module 210b.

The service communication unit 220 transmits and receives data required for or associated with providing a notification of an estimated arrival time on an electronic ticket by communicating with the terminal device 100, the real-time transportation tracking system 300 and the traffic information system 400 through the communication network 500.

The service storage unit 230 stores all programs required for or associated with providing a notification of an estimated arrival time on an electronic ticket.

The service control unit 210 includes the electronic ticket module 210a that issues an electronic ticket and then offers the electronic ticket to the customer terminal device 100a. The service control unit 210 further includes the navigation module 210b that calculates, using information contained in the electronic ticket, an estimated arrival time which varies depending on traffic situations.

Information contained in the electronic ticket issued by the electronic ticket module 210a includes transportation information, starting point information, destination information, a departure time, and an estimated arrival time. Here, the transportation information includes information about the type of transportation and about the unique identification of transportation. After departure, information contained in the electronic ticket may further include a delay time calculated by the navigation module 210b.

The navigation module 210b compares the current time with the departure time. If the current time is before the departure time, the navigation module 210b extracts a route from the starting point to the destination and then calculates the estimated arrival time based on the extracted route. If the current time is after the departure time, the navigation module 210b obtains real-time location information of transportation and traffic information around transportation and then calculates the estimated arrival time based on the obtained information.

Meanwhile, the navigation module 210b may collect the real-time location information of transportation from one of the user terminal device 100 and the real-time transportation tracking system 300. The user terminal device 100 may be the customer terminal device 100a or the driver terminal device 100b.

Also, if the current time is after the departure time, the navigation module 210b may further calculate a delay time by comparing an initial estimated arrival time, calculated on the basis of the route information before departure, with a new estimated arrival time calculated on the basis of the real-time location information and the traffic information.

In one embodiment of this invention, the service control unit 210 may receive an input for requesting an electronic ticket from the customer terminal device 100a, create the electronic ticket through the electronic ticket module 210a in response to the received input, provide the created electronic ticket to the customer terminal device 100a, collect real-time location information of transportation from the location tracking unit 160 of the terminal device 100 or from the real-time transportation tracking system 300, calculate an estimated arrival time through the navigation module 210b, and provide the estimated arrival time to the customer terminal device 100a.

In another embodiment of this invention, the service control unit 210 may merely create an electronic ticket through the electronic ticket module 210a in response to an input for requesting an electronic ticket received from the customer terminal device 100a.

Although this description and drawings illustrate exemplary device elements, the subject matters and functional operations disclosed herein may be implemented by different type digital electronic circuits or implemented by computer software, firmware or hardware including a structure disclosed herein and structural equivalent thereof, or any combination thereof. The subject matters disclosed herein may be implemented by at least one computer program product, namely at least one module regarding computer program commands encoded on a program storage medium so as to control the operation of a device according to this invention or allow execution thereby. A computer-readable medium may be a machine-readable storage device, a machine-readable storage board, a memory device, a machine-readable composition of material affecting wave-type signaling, or a combination thereof.

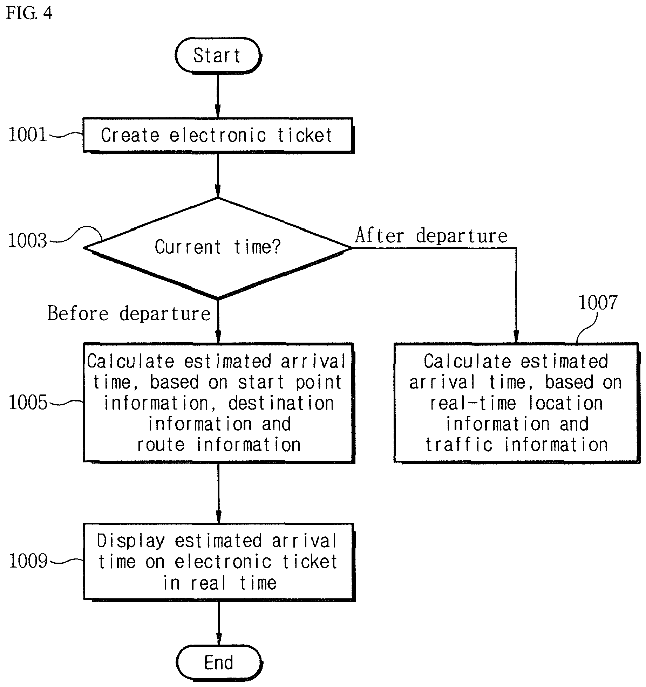

FIG. 4 is a flow diagram illustrating a method for a notification of an estimated arrival time on an electronic ticket according to embodiments of the present invention.

Referring to FIG. 4, at step 1001, the service device 200 creates an electronic ticket. The created electronic ticket may contain transportation information including transportation type and identification, starting point information, destination information, a departure time, and an estimated arrival time.

At step 1003, the customer terminal device 100a or the service device 200 compares the current time with the departure time.

If the current time is before the departure time, the customer terminal device 100a or the service device 200 extracts a route from the starting point to the destination and calculates the estimated arrival time on the basis of the extracted route at step 1005. For extracting the route, a prearranged bus route or the like may be further considered.

If the current time is after the departure time, the customer terminal device 100a or the service device 200 calculates the estimated arrival time on the basis of real-time location information of transportation and traffic information around transportation at step 1007. The real-time location information may be received from the location tracking unit 160 of one of the customer terminal device 100a and the driver terminal device 100b, and the traffic information may be received from the traffic information system 400.

At step 1009, the customer terminal device 100a displays the estimated arrival time on the electronic ticket in real time.

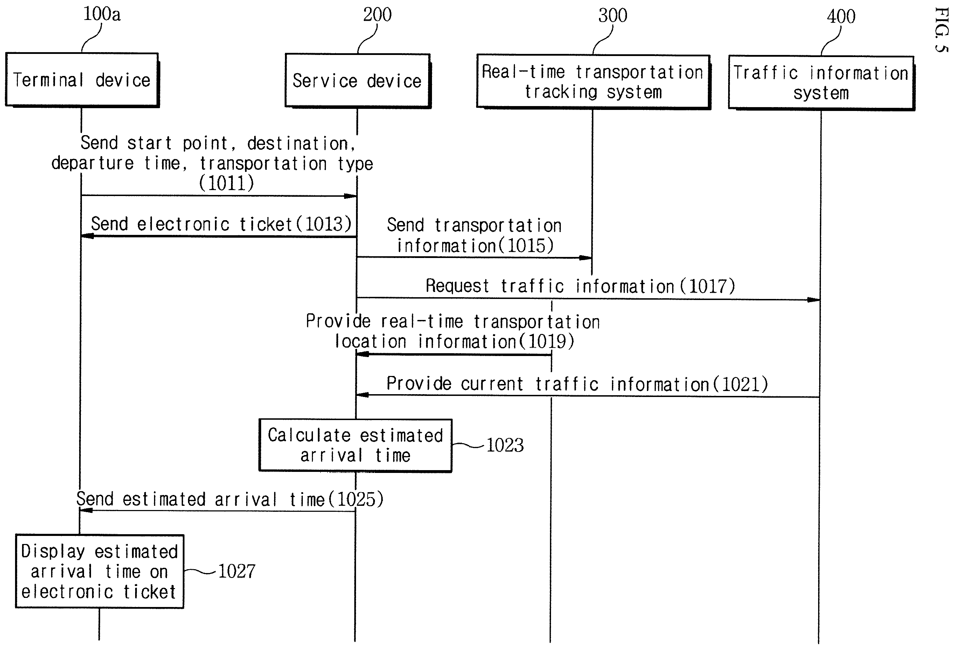

FIG. 5 is a flow diagram illustrating a method for a notification of an estimated arrival time calculated at a service device according to an embodiment of the present invention.

Referring to FIG. 5, at step 1011, the service device 200 receives, from the customer terminal device 100a, information about a starting point, a destination, a departure time, and a transportation type.

Then, at step 1013, the service device 200 creates a suitable electronic ticket based on the received information and then transmits the created electronic ticket to the customer terminal device 100a. The created electronic ticket contains therein and displays thereon transportation information including transportation type and identification, starting point information, destination information, a departure time, and an estimated arrival time.

At step 1015, the service device 200 transmits transportation information to the real-time transportation tracking system 300 so as to receive information about a real-time location of transportation being used by a customer. For example, if the transportation is a bus, the transportation information may contain information indicating that the type of transportation is a bus, and information about a unique identification of the bus.

At step 1017, the service device 200 sends a request for traffic information to the traffic information system 400. For example, if the type of transportation is a bus, the service device 200 requests road traffic information at the current location of the bus. If the type of transportation is a ship, the service device 200 requests marine environmental information around the current location of the ship.

At step 1019, the service device 200 receives the real-time transportation location information from the real-time transportation tracking system 300. In case of a bus, the real-time transportation tracking system 300 may identify a specific bus, based on the bus identification information, and then offer a specific point of the bus on a road as the current location of the bus.

At step 1021, the service device 200 receives the current traffic information from the traffic information system 400. In case of a bus, the traffic information system 400 may collect road traffic information through unmanned cameras or the like installed on the load and provide information about smooth or blocked sections of traffic. In case of a ship, the traffic information system 400 may provide marine environmental information such as the existence of other ships around the ship and weather information such as wind and waves.

At step 1023, the service device 200 calculates an estimated arrival time. Specifically, the navigation module 210b of the service device 200 compares the current time with the departure time. If the current time is before the departure time, the navigation module 210b extracts route information, based on the starting point information and the destination information, and then calculates the estimated arrival time, based on the extracted route information. At this time, a prearranged route of transportation may be further considered. If the current time is after the departure time, the navigation module 210b calculates the estimated arrival time, based on both the real-time transportation location information received from the real-time transportation tracking system 300 and the current traffic information received from the traffic information system 400.

At step 1025, the service device 200 transmits the calculated estimated arrival time to the customer terminal device 100a.

At step 1027, the customer terminal device 100a displays the received estimated arrival time on the electronic ticket. The estimated arrival time displayed on the electronic ticket may be varied in real time.

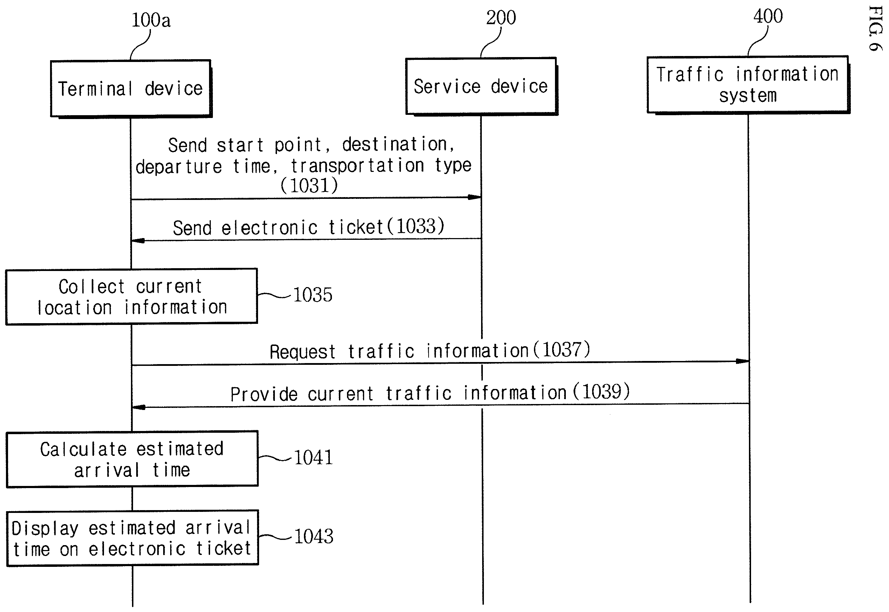

FIG. 6 is a flow diagram illustrating a method for a notification of an estimated arrival time calculated at a terminal device according to another embodiment of the present invention.

Referring to FIG. 6, at step 1031, the customer terminal device 100a transmits, to the service device 200, information about a starting point, a destination, a departure time, and a transportation type.

At step 1033, the customer terminal device 100a receives, from the service device 200, an electronic ticket created by the service device 200 based on the received information. The created electronic ticket contains therein and displays thereon transportation information including transportation type and identification, starting point information, destination information, a departure time, and an estimated arrival time.

At step 1035, the customer terminal device 100a collects current location information thereof through the location tracking unit 160. If a customer is on board, the real-time location of the customer terminal device 100a may be identical with that of transportation.

At step 1037, the customer terminal device 100a sends a request for traffic information to the traffic information system 400. For example, if the type of transportation is a bus, the customer terminal device 100a requests road traffic information at the current location of the bus. If the type of transportation is a ship, the customer terminal device 100a requests marine environmental information around the current location of the ship.

At step 1039, the customer terminal device 100a receives current traffic information from the traffic information system 400. In case of a bus, the traffic information system 400 may collect road traffic information through unmanned cameras or the like installed on the load and provide information about smooth or blocked sections of traffic. In case of a ship, the traffic information system 400 may provide marine environmental information such as the existence of other ships around the ship and weather information such as wind and waves.

At step 1041, the customer terminal device 100a calculates an estimated arrival time. Specifically, the control unit 110 of the customer terminal device 100a compares the current time with the departure time. If the current time is before the departure time, the control unit 110 extracts route information, based on the starting point information and the destination information, and then calculates the estimated arrival time, based on the extracted route information. At this time, a prearranged route of transportation may be further considered. If the current time is after the departure time, the control unit 110 calculates the estimated arrival time, based on both the real-time transportation location information received from the location tracking unit 160 and the current traffic information received from the traffic information system 400.

At step 1043, the customer terminal device 100a displays the calculated estimated arrival time on the electronic ticket. The estimated arrival time displayed on the electronic ticket may be varied in real time.

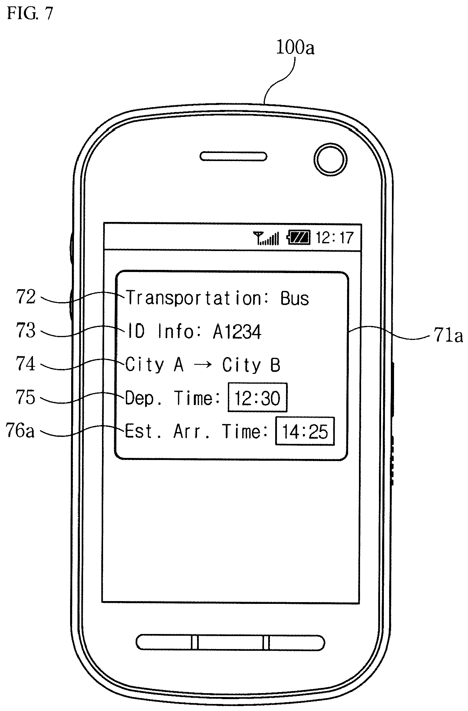

FIG. 7 is an exemplary screenshot illustrating an electronic ticket displayed on a terminal device before a departure time according to an embodiment of the present invention.

Referring to FIG. 7, an electronic ticket 71a created according to this invention is distinctively displayed through the display unit 140.

As shown, the current time is 12:17 and the departure time is 12:30. Therefore, this electronic ticket 71a is the initial electronic ticket created before departure.

The initial electronic ticket 71a contains therein and displays thereon transportation information such as a transportation type 72 and identification information 73, information 74 about a starting point and a destination, a departure time 75, and an estimated arrival time 76a.

Since the transportation type 72 is a bus, the identification information 73 indicates a bus ID. Also, since the current time is before the departure time, the estimated arrival time 76a is calculated on the basis of route information extracted using the starting point and destination information 74.

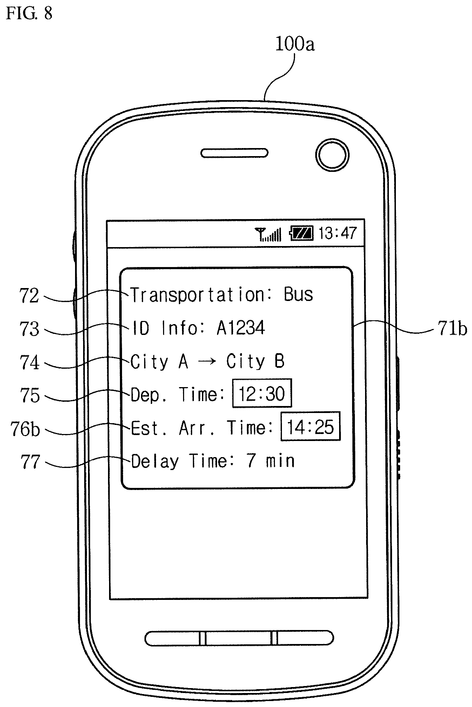

FIG. 8 is an exemplary screenshot illustrating an electronic ticket displayed on a terminal device after a departure time according to another embodiment of the present invention.

As shown, the current time is 13:47 and the departure time is 12:30. Therefore, this electronic ticket 71 b is a new electronic ticket created after departure.

This new electronic ticket 71b further contains and displays a delay time 77.

Also, since the current time is after the departure time, the estimated arrival time 76b is calculated on the basis of real-time location information and traffic information. In an example shown in FIGS. 7 and 8, the estimated arrival time 76a initially calculated using route information is 14:25, whereas the estimated arrival time 76b newly calculated is 14:32. This difference, seven minutes, is displayed as the delay time 77.

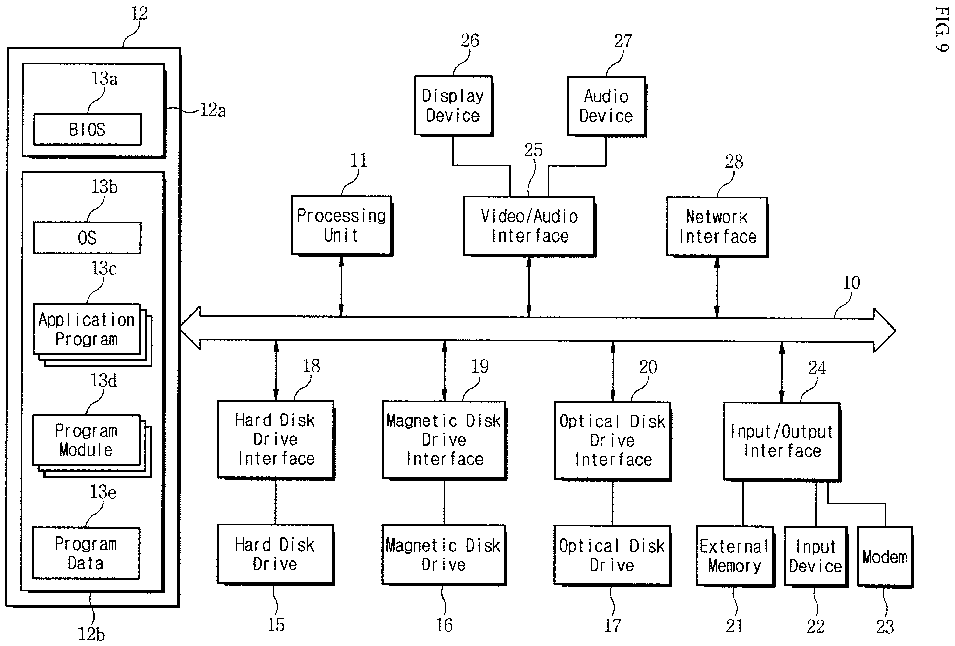

FIG. 9 is a block diagram illustrating an operating environment of an electronic device for implementing a notification of an estimated arrival time on an electronic ticket according to an embodiment of the present invention.

FIG. 7 and the following discussion are intended to provide a brief, general description of an example suitable computing environment in which the invention may be implemented. Although not required (e.g., when implemented in hardware), the invention will be described in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

Referring to FIG. 7, an exemplary computing system for implementing the invention includes a processing unit 11, a system memory 12, and a system bus 10 that couples various system components including the system memory 12 to the processing unit 11.

The processing unit 11 can execute computer-executable instructions designed to implement features of this invention.

The system bus 10 may be any of several, types of bus structures including a memory bus or memory controller, a peripheral bus, and a local bus using any of a variety of bus architectures. The system memory 12 includes read only memory (ROM) 12a and random access memory (RAM) 12b. A basic input/output system (BIOS) 13a, containing the basic routines that help transfer information between elements within computer system, such as during start-up, may be stored in the ROM 12a.

The computing system may also include a storage unit, e.g., a hard disk drive 15 for reading from and writing to a hard disk, a magnetic disk drive 16 for reading from or writing to a magnetic disk, and an optical disk drive 17 for reading from or writing to an optical disk such as a CD-ROM or other optical media. The hard disk drive 15, the magnetic disk drive 16, and the optical disk drive 17 are connected to the system bus 10 by a hard disk drive interface 18, a magnetic disk drive-interface 19, and an optical drive interface 20, respectively.

Additionally, the computing system may further include an external memory 21 as the storage unit. The external memory 21 may be connected to the system bus 10 through an input/output interface 24.

The drives and their associated computer-readable media provide nonvolatile storage of computer-executable instructions, data structures, program modules, and other data for the computing system. Although the example environment described herein employs the hard disk 15, the magnetic disk 16 and the optical disk 17, other types of computer readable media for storing data can be used, including magnetic cassettes, flash memory cards, digital versatile disks, Bernoulli cartridges, RAMs, ROMs, and the like.

Program code means including one or more program modules, such as an operating system 13b, one or more application programs 13c, other program modules 13d, and program data 13e, may be stored on the hard disk 15, the magnetic disk 16, the optical disk 17, the ROM 12a, or the RAM 12b.

A user may enter commands and information into the computing system through other input device 22 such as a keyboard, a pointing device, a microphone, a joy stick, a game pad, or the like. This other input device 22 can be connected to the processing unit 11 through the input/output interface 24 coupled to the system bus 10. The input/output interface 24 may logically represent any of a wide variety of different interfaces, such as, for example, a serial port interface, a PS/2 interface, a parallel port interface, a universal serial bus (USB) interface, or an institute of electrical and electronics engineers (IEEE) 1394 interface (i.e., a FireWire interface), or may even logically represent a combination of different interfaces.

Additionally, the computing system may further include a display device 26 such as a monitor or LCD and/or an audio device 27 such as a speaker or a microphone, which are connected to the system bus 10 via a video/audio interface 25. The video/audio interface 25 may include high definition multimedia interface (HDMI), graphics device interface (GDI), or the like.

The computing system is connectable to networks, such as, for example, an office-wide or enterprise-wide computer network, a home network, an intranet, and/or the Internet. The computing system can exchange data with external sources, such as, for example, remote computer systems, remote applications, and/or remote databases over such networks.

The computing system includes a network interface 28, through which the computing system receives data from external sources and/or transmits data to external sources. The network interface 28 facilitates the exchange of data with remote devices. For example, if the computing system is the terminal device 100, the terminal device 100 may transmit or receive information to or from the service device 200 through the network interface 28. If the computing system is the service device 200, the service device 200 may transmit or receive information to or from the terminal device 100 through the network interface 28. The network interface 28 can logically represent one or more software and/or hardware modules, such as, for example, a network interface card and corresponding network driver interface specification (NDIS) stack.

Likewise, the computing system receives and/or transmits data from and/or to external sources through the input/output interface 24. The input/output interface 24 is coupled to a modem 23 (e.g., a standard modem, a cable modem, or a digital subscriber line (DSL) modem), through which the computing system receives data from and/or transmits data to external sources.

While FIG. 9 represents a suitable operating environment for the present invention, the principles of the present invention may be employed in any system that is capable of, with suitable modification if necessary, implementing the principles of the present invention. The environment illustrated in FIG. 9 is illustrative only and by no means represents even a small portion of the wide variety of environments in which the principles of the present invention may be implemented.

Programs and various kinds of information generated during the execution of programs of this invention may be stored and accessed from any of the computer-readable media associated with the computing system as shown in FIG. 9. For example, portions of such modules and portions of associated program data may be included in the operating system 13b, the application programs 13c, the program modules 13d and/or the program data 13e, for storage in the system memory 12.

When a mass storage device such as the hard disk is coupled to the computing system, such modules and associated program data may also be stored in the mass storage device. In a networked environment, program modules depicted relative to the computing system, or portions thereof, can be stored in a remote computer system connected through the modem 23 or network interface 25 of the input/output interface 24. Execution of such modules may be performed in a distributed environment as previously described.

While the specification contains many specific implementation details, these should not be construed as limitations on the scope of any disclosure or of what may be claimed, but rather as descriptions of features that may be specific to particular embodiments of particular disclosures. Certain features that are described in the specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Also, although the present specifications describe that operations are performed in a predetermined order with reference to a drawing, it should not be construed that the operations are required to be performed sequentially or in the predetermined order, which is illustrated to obtain a preferable result, or that all of the illustrated operations are required to be performed. In some cases, multi-tasking and parallel processing may be advantageous. Also, it should not be construed that the division of various system components are required in all types of implementation. It should be understood that the described program components and systems are generally integrated as a single software product or packaged into a multiple-software product.

While this disclosure has been particularly shown and described with reference to an exemplary embodiment thereof, it will be understood by those skilled in the art that various changes in form and details may be made therein without departing from the scope of this disclosure as defined by the appended claims.

This invention has a good possibility of sales on the market or business and also has industrial applicability suitable for practical and apparent implementation.

## Claims

1. A service device comprising:
a service communication unit configured to transmit or receive data through a communication network; and
a service control unit configured to provide an electronic ticket containing transportation information, starting point information, destination information, a departure time, and an estimated arrival time to a terminal device through the service communication unit, and configured to calculate the estimated arrival time based on the transportation information, the starting point information, the destination information, and the departure time.

2. The service device of claim 1, wherein the service control unit includes:
an electronic ticket module configured to issue the electronic ticket and to provide the electronic ticket to the terminal device; and
a navigation module configured to calculate the estimated arrival time which varies according to traffic situations.

3. The service device of claim 2, wherein the navigation module is further configured to:
compare a current time with the departure time,
if the current time is before the departure time, extract route information based on the starting point information and the destination information, and initially calculate the estimated arrival time based on the route information, and
if the current time is after the departure time, collect real-time location information of transportation and traffic information, and newly calculate the estimated arrival time in consideration of the real-time location information and the traffic information.

4. The service device of claim 3, wherein the navigation module is further configured to collect the real-time location information from one of a user terminal device and a real-time transportation tracking system.

5. The service device of claim 3, wherein the navigation module is further configured to, if the current time is after the departure time, calculate a delay time by comparing the initially calculated estimated arrival time with the newly calculated estimated arrival time.

6. A method for a notification of an estimated arrival time on an electronic ticket at a device, the method comprising steps of:
creating the electronic ticket that contains transportation information, starting point information, destination information, a departure time, and the estimated arrival time;
calculating the estimated arrival time, based on the transportation information, the starting point information, the destination information, and the departure time; and
displaying in real time the calculated estimated arrival time on the electronic ticket.

7. The method of claim 6, wherein the calculating step includes:
comparing a current time with the departure time,
if the current time is before the departure time, extracting route information based on the starting point information and the destination information, and initially calculating the estimated arrival time based on the route information, and
if the current time is after the departure time, collecting real-time location information of transportation and traffic information, and newly calculating the estimated arrival time in consideration of the real-time location information and the traffic information.

8. A computer-readable recording medium having, recorded thereon, a program executing the method of claim 6.
